# EUROPÄISCHE PATENTANMELDUNG

(11) **EP 1 510 389 A2**
(43) Veröffentlichungstag der Anmeldung: **02.03.2005**
(21) Anmeldenummer: 04020228.5
(22) Anmeldetag: 26.08.2004
(51) Int. Cl.: B60J 7/02

(54) **Führungsanordnung für ein verstellbares Element eines Fahrzeugdaches sowie Fahrzeugdach mit einer solchen Führungsanordnung**

(30) Priorität: 26.08.2003 DE 10339264
(71) Anmelder: Webasto AG, 82131 Stockdorf (DE)
(72) Erfinder: Radmanic, Stjepan, 82291 Mammendorf (DE)

(57) **Zusammenfassung**

Die Erfindung betrifft eine Führungsanordnung für ein verstellbares Element (12) eines Fahrzeugdaches, mit einer karosseriefesten Führungsbahn (20, 22, 40) und einer Führungseinrichtung (10), die mit dem verstellbaren Element verbunden ist und entlang der Führungsbahn in Längsrichtung verschiebbar geführt ist, wobei die Führungseinrichtung bezüglich der Querrichtung an der Führungsbahn jeweils mittels eines ersten Führungsabschnitts (18, 30) bzw. eines zweiten Führungsabschnitts (34, 36, 38) geführt ist. Mindestens einer der beiden Führungsabschnitte (34, 36, 38) der Führungseinrichtung (10) ist mit einem elastischen Bauteil (38) versehen, welches ausgebildet ist, um die beiden Führungseinrichtungen mit einer Vorspannkraft in Querrichtung voneinander weg und zu der Führungsbahn (22, 40) hin zu beaufschlagen.

## Beschreibung

Die vorliegende Erfindung betrifft eine Führungsanordnung für ein verstellbares Element eines Fahrzeugdaches, insbesondere für den Deckel eines außengeführten Schiebedaches, gemäß dem Oberbegriff von Anspruch 1 sowie ein Fahrzeugdach mit einer solchen Führungsanordnung.

Eine gattungsgemäße Führungsanordnung ist beispielsweise in der DE 100 33 887 C1 bzw. der DE 101 17 322 A1 beschrieben, wobei die Führungsanordnung dort jeweils für ein sogenanntes außen geführtes Schiebedach ist. Bei einem außen geführten Schiebedach wird ein in einer Schließstellung eine Dachöffnung verschließender Deckel zum Freilegen der Dachöffnung nach hinten über die feste Dachfläche geschoben, wobei der Deckel seitlich vorn und hinten jeweils in einer dachfesten Führungsschiene geführt ist.

Insbesondere bei großen Deckeln können, z.B. beim Befahren eines stark unebenen Streckenabschnitts, beträchtliche Kräfte in Dachquerrichtung auf den Deckel wirken, was bei einem durch Bauteiltoleranzen bedingten Spiel der Führung des Deckels in Dachquerrichtung zu einer Bewegung des Deckels in Dachquerrichtung und insbesondere zu Klappergeräuschen zwischen der Deckelmechanik und der dachfesten Führung führen kann.

Aus der DE 41 34 065 C1 ist ein Fahrzeugdach mit einem Schiebehimmel bekannt, der so in einer dachfesten Führung in Dachlängsrichtung verschiebbar geführt ist, dass auf einer Seite des Himmels ein Führungseinsatz vorgesehen ist, der den Schiebehimmel in Dachquerrichtung von der auf dieser Seite angeordneten Führungsschiene zu der auf der anderen Seite angeordneten Führungsschiene hin vorspannt, um Toleranzen des Schiebehimmels in Dachquerrichtung auszugleichen.

In der DE 196 01 120 C1 ist eine Gleitbacke für die Führung eines verstellbaren Fahrzeugdachteils beschrieben, wobei die Gleitbacke sowohl bezüglich der oberen und unteren als auch bezüglich der seitlichen Anlagefläche mittels einer Hohlkammerstruktur elastisch ausgebildet ist.

Es ist Aufgabe der vorliegenden Erfindung, eine Führungsanordnung für ein verstellbares Element eines Fahrzeugdaches zu schaffen, bei welcher eventuell in Querrichtung zu der Führung wirkende Kräfte auf das verstellbare Element von der Führungsanordnung möglichst aufgefangen werden können, um insbesondere Klappergeräusche zu vermeiden. Ferner soll ein Fahrzeugdach mit einer solchen Führungsanordnung geschaffen werden.

Diese Aufgabe wird erfindungsgemäß gelöst durch eine Führungsanordnung gemäß Anspruch 1 sowie ein Fahrzeugdach gemäß Anspruch 11. Bei dieser Lösung ist vorteilhaft, dass dadurch, das mindestens einer der beiden Führungsabschnitte mit einem elastischen Bauteil versehen ist, um die beiden Führungsabschnitte in Querrichtung voneinander weg und zu der Führungsbahn hin vorzuspannen, Bauteiltoleranzen in der Querrichtung ausgeglichen werden können und dadurch die Bewegungsmöglichkeit des verstellbaren Elements in der Querrichtung reduziert wird, wodurch insbesondere auch Klappergeräusche verhindert werden können.

Bevorzugte Ausgestaltungen der Erfindungen ergeben sich aus den Unteransprüchen.

Im folgenden wird die Erfindung anhand der beigefügten Zeichnungen beispielhaft näher erläutert. Dabei zeigen:
- Fig. 1: eine Querschnittansicht der vorderen Führungsanordnung auf einer Seite eines außen geführten Schiebedaches;
- Fig. 2: eine perspektivische vergrößerte Ansicht des rechten seitlichen Führungsabschnitts der Führungsanordnung von Fig. 1, wobei jedoch die Führungsschiene weggelassen ist; und
- Fig. 3: eine Ansicht wie Fig. 2, wobei jedoch die Gleitkappe weggelassen ist.

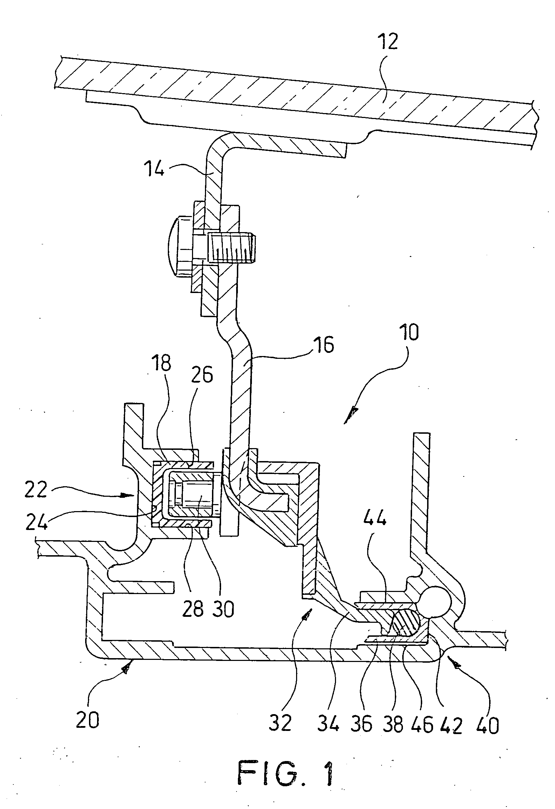

In Fig. 1 ist in einer Schnittansicht in Dachquerrichtung eine vordere Führungsanordnung 10 für den Deckel 12 eines außen geführten Schiebedaches gezeigt. Eine solche Führungsanordnung 10 ist vorn an beiden Seiten des Deckels vorgesehen. Die Funktionsweise von außen geführten Schiebedächern ist an sich bekannt und beispielsweise in der DE 100 33 878 C1 oder der DE 101 17 322 A1 beschrieben.

Der Deckel 12 ist an seiner Unterseite mit einem Deckelanbindungswinkel 14 versehen, welcher wiederum mittels einer Schraubverbindung mit einem Deckelträger 16 verbunden ist. Der Deckelträger 16 trägt eine Gleitkappe 18, welche in einer karrosseriefesten, in Dachlängsrichtung verlaufenden Führungsschiene 20 in Dachlängsrichtung verschiebbar geführt ist. Der Teilbereich 22 der Führungsschiene 20, in welcher die Gleitkappe 18 geführt ist, bildet dabei eine seitliche Anlagefläche 24 sowie eine obere bzw. untere Anlagefläche 26 bzw. 28. Die Gleitkappe 18 ist auf einem Vorsprung 30 des Deckelträgers 16 drehbar gelagert. Mittels der Anlageflächen 26 und 28 wird die Gleitkappe 18 bezüglich der Dachhochrichtung geführt, während die Anlagefläche 24 zur seitlichen Führung dient.

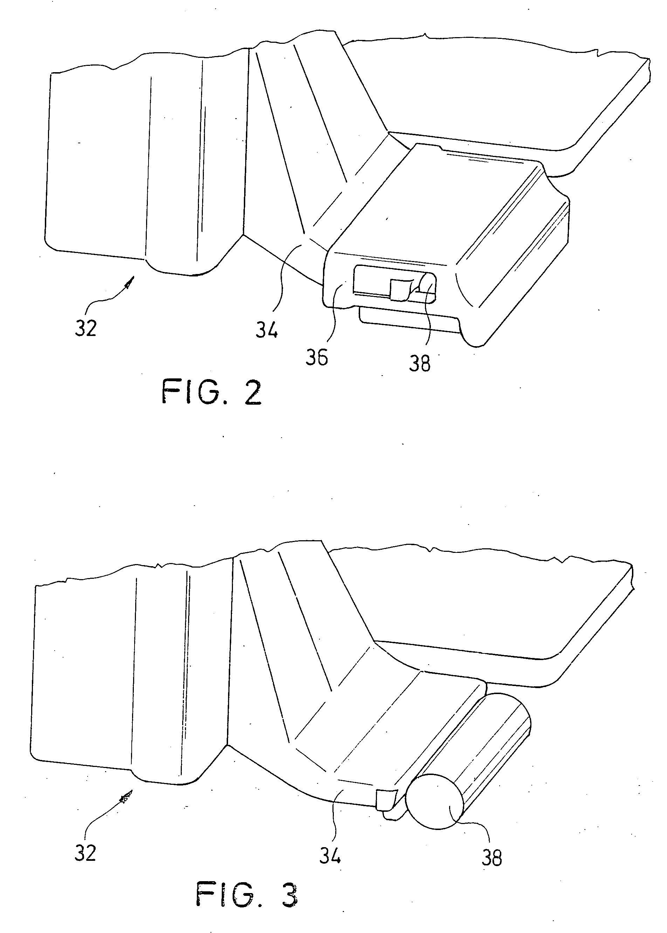

An dem Deckelträger 16 liegt seitlich ein Schlitten 32 an, welcher einen sich seitlich von dem Deckelträger 16 weg erstreckenden Flansch 34 aufweist, über dessen seitliches Ende eine Gleitkappe 36 gesteckt ist. Zwischen dem seitlichen (in Fig. 1 rechten) Ende des Flanschs 34 und der Gleitkappe 36 ist ein Körper 38 aus elastischem Material, vorzugsweise aus Gummi, eingelegt. Wie aus Fig. 3 ersichtlich ist, kann der elastische Körper beispielsweise eine zylindrische oder zylinderartige Form aufweisen, wobei die Zylinderachse parallel zu der Führungsschiene 20 verläuft.

Die Gleitkappe 36 des Schlittens 32 ist in einem Teilbereich 40 der Führungsschiene 20 geführt, welcher eine seitliche Anlagefläche 42 sowie eine obere Anlagefläche 44 und eine untere Anlagefläche 46 für die Gleitkappe 36 aufweist. Auf diese Weise ist die Gleitkappe 36 des Schlittens 32 bezüglich der Dachhochrichtung sowie bezüglich der Dachquerrichtung nach rechts in Fig. 1 festgelegt bzw. geführt, wobei die Gleitkappe 36 in dem Teilbereich 42 der Schiene 20 in Dachlängsrichtung verschiebbar ist.

Der elastische Körper 38 dient dazu, den Flansch 34 und damit den Schlitten 32 in Dachquerrichtung von der seitlichen Anlagefläche 42 des Teilbereichs der Führungsschiene 20 zum Deckelträger 16 hin (d.h. in Fig. 1 nach links) vorzuspannen. Auf diese Weise wird auch die Gleitkappe 18 des Deckelträgers 16 zur seitlichen Anlagefläche 24 des Teilbereichs 22 der Schiene 20 (d.h. in Fig. 1 nach links) hin vorgespannt. Die dabei wirkenden Kräfte sind in Fig. 1 mit mit "F" bezeichneten Pfeilen angedeutet. Die Gleitkappe 36 des Schlittens 32 wird dabei mittels des elastischen Körpers 38 zur seitlichen Anlagefläche 42 hin (d.h. in Fig. 1 nach rechts) vorgespannt.

Auf diese Weise liegt die Gleitkappe 18 des Deckelträgers 16 unabhängig von Bauteiltorelanzen immer an der linken seitlichen Anlagefläche 24 der Schiene 20 an, während die Gleitkappe 36 des Schlittens 32 immer an der rechten seitlichen Anlagefläche 42 der Schiene 20 anliegt. Auf diese Weise können Bauteiltoleranzen auf einfache Weise gut ausgeglichen werden. Falls, z.B. bei Fahrt auf einer sehr unebenen Strecke, starke in Dachquerrichtung wirkende Kräfte am Deckel 12 auftreten, können diese aufgrund der Elastizität des Körpers 38 gut aufgefangen werden, wodurch insbesondere Klappergeräusche vermieden werden können.

Anstelle des elastischen Körpers 38 könnte grundsätzlich auch ein anderes federelastisches Element vorgesehen sein. Ferner versteht es sich, dass die erfindungsgemäße Führungsanordnung statt für ein außen geführtes Schiebedach grundsätzlich auch für andere verstellbare Dachelemente verwendet werden kann, beispielsweise für den Deckel eines Spoilerdaches, eines Schiebedaches oder eines Schiebehebedaches.

### Bezugszeichenliste

- 10: Führungsanordnung
- 12: Schiebedeckel
- 14: Deckelanbindungswinkel
- 16: Deckelträger
- 18: Gleitkappe
- 20: Führungsschiene
- 22: Teilbereich von 20
- 24: seitliche Anlagefläche
- 26: obere Anlagefläche
- 28: untere Anlagefläche
- 30: Vorsprung
- 32: Schlitten
- 34: Flansch
- 36: Gleitkappe
- 38: elastischer Körper
- 40: Teilbereich von 20
- 42: seitliche Anlagefläche
- 44: obere Anlagefläche
- 46: untere Anlagefläche

## Patentansprüche

1. Führungsanordnung für ein verstellbares Element (12) eines Fahrzeugdaches, mit einer karosseriefesten Führungsbahn (20, 22, 40) und einer Führungseinrichtung (10), die mit dem verstellbaren Element verbunden ist und entlang der Führungsbahn in Längsrichtung verschiebbar geführt ist, wobei die Führungseinrichtung bezüglich der Querrichtung an der Führungsbahn jeweils mittels eines ersten Führungsabschnitts (18, 30) bzw. eines zweiten Führungsabschnitts (34, 36, 38) geführt ist, **dadurch gekennzeichnet, dass** mindestens einer der beiden Führungsabschnitte (34, 36, 38) der Führungseinrichtung (10) mit einem elastischen Bauteil (38) versehen ist, welches ausgebildet ist, um die beiden Führungseinrichtungen mit einer Vorspannkraft in Querrichtung voneinander weg und zu der Führungsbahn (22, 40) hin zu beaufschlagen.

2. Führungsanordnung gemäß Anspruch 1, **dadurch gekennzeichnet, dass** das elastische Bauteil von einem Körper (38) aus elastischem Material, insbesondere Gummi, gebildet wird.

3. Führungsanordnung gemäß Anspruch 2, **dadurch gekennzeichnet, dass** das elastische Bauteil (38) ausgebildet ist, um eine das Bauteil mindestens zum Teil umschließende Gleitkappe (36) mit einer Vorspannkraft in Querrichtung zur Anlage an die Führungsbahn (40, 42) hin zu beaufschlagen.

4. Führungsanordnung gemäß Anspruch 3, **dadurch gekennzeichnet, dass** die Gleitkappe (36) auf einen Flansch (34) der Führungseinrichtung (10, 32) aufgesteckt ist, wobei der Körper (38) aus elastischem Material zwischen der Gleitkappe und dem Flansch liegt.

5. Führungsanordnung gemäß Anspruch 4, **dadurch gekennzeichnet, dass** das elastische Bauteil (38) Zylinder-artig ausgebildet ist, wobei die Achse in der Richtung der Führungsbahn (20, 22, 40) verläuft.

6. Führungsanordnung gemäß einem der vorhergehenden Ansprüche, **dadurch gekennzeichnet, dass** die Führungseinrichtung einen Schlitten (32) und einen Träger (16), der mit dem verstellbaren Dachelement (12) verbunden ist, aufweist, wobei der Schlitten einen der Führungsabschnitte (34, 36, 38) mit dem elastischen Bauteil (38) aufweist, wobei der andere Führungsabschnitt (18, 30) an dem Träger ausgebildet ist und wobei der Schlitten mittels des elastischen Bauteils den Träger in Querrichtung zu der Führungsbahn (22) hin vorspannt.

7. Führungsanordnung gemäß einem der vorhergehenden Ansprüche, **dadurch gekennzeichnet, dass** der andere Führungsabschnitt (18, 30) von einer Gleitkappe (30) gebildet wird, die um eine in Querrichtung verlaufende Achse drehbar an der Führungseinrichtung (10) gelagert ist.

8. Führungsanordnung gemäß einem der vorhergehenden Ansprüche, **dadurch gekennzeichnet, dass** die Führungsbahn als Führungsschiene (20, 22, 40) ausgebildet ist, wobei der erste (18, 30) und der zweite Führungsabschnitt (34, 36, 38) in Querrichtung von innen an gegenüberliegenden seitlichen Anlageflächen (24, 42) der Schiene anliegen.

9. Führungsanordnung gemäß einem der vorhergehenden Ansprüche, **dadurch gekennzeichnet, dass** der erste (18, 30) und der zweite Führungsabschnitt (34, 36, 38) ausgebildet sind, um im Zusammenwirken oder jeweils einzeln für eine Führung der Führungseinrichtung (10) bezüglich der Hochrichtung zu sorgen.

10. Führungsanordnung gemäß Anspruch 9, **dadurch gekennzeichnet, dass** die Führungsschiene (20, 22, 40) jeweils eine obere (26, 44) und eine untere Anlagefläche (28, 46) für den ersten (18, 30) und den zweiten Führungsabschnitt (34, 36, 38) bildet.

11. Fahrzeugdach mit einer Führungsanordnung (10) gemäß einem der vorhergehenden Ansprüche.

12. Fahrzeugdach gemäß Anspruch 11, **dadurch gekennzeichnet, dass** es sich bei dem Dachelement um den Deckel (12) eines außen geführten Schiebedaches handelt.

13. Fahrzeugdach gemäß Anspruch 12, **dadurch gekennzeichnet, dass** die Führungseinrichtung (10) im vorderen Bereich des Deckels (12) vorgesehen ist.

14. Fahrzeugdach gemäß Anspruch 12 oder 13, **dadurch gekennzeichnet, dass** auf jeder Seite des Deckels (12) eine der Führungsanordnungen (10) vorgesehen ist.
